# EUROPEAN PATENT APPLICATION

(11) **EP 3 369 779 A1**
(43) Date of publication of application: **05.09.2018**
(21) Application number: 16859029.7
(22) Date of filing: 26.10.2016
(51) Int. Cl.: C08L 77/06, C08L 51/06, C08L 27/18, C08K 13/04, C08K 3/04, C08K 7/24, C08K 7/10, C08K 7/06, C08K 3/28, C08K 3/22, C08J 5/04

(54) **CONTINUOUS LONG CARBON FIBER REINFORCED, THERMOPLASTIC RESIN-BASED NANOCOMPOSITE MATERIAL, PREPARATION METHOD AND APPLICATIONS THEREOF**

(30) Priority: 27.10.2015 CN 201510708712
(71) Applicant: Beijing Nashengtong Advanced Material&Technology Co. Ltd, Beijing 100085 (CN)
(72) Inventor: FANG, Kun, Beijing 100085 (CN); FANG, Zheng, Beijing 100085 (CN); LI, Mei, Beijing 100085 (CN)
(74) Representative: Hoefer & Partner Patentanwälte mbB
(86) International application number: PCT/CN2016/103423
(87) International publication number: WO 2017/071594

(57) **Abstract**

Disclosed in the present disclosure is long carbon fiber reinforced thermoplastic composites, a method for preparing the same and an application thereof. The composites comprise a long carbon fiber, a thermoplastic resin base, a filler and an auxiliary, and is multi-component blend composites with multi-phase structural characteristics prepared by an isostatic pressing molten resin base impregnation composite process method. The composites has a weight content of the long carbon fiber (LCF) is 40-70 wt%; a weight content of the thermoplastic resin base is 25-40 wt%; a weight content of the filler is 3-15 wt%; and a weight content of the auxiliary is 2-5 wt%. A retained length dimension of the long carbon fiber (LCF) in a fabricated shaped part article is 0.5-15 mm, meeting a normal distribution requirement of ≥80%. The composites of the present disclosure has the outstanding properties and advantages of small specific gravity, high strength, good toughness, good electrical and thermal conductivity, wear resistance, corrosion resistance, fatigue resistance, simple production process, and low cost for the processing of the parts, etc.

## Description

### TECHNICAL FIELD

The present disclosure relates to long carbon fiber reinforced thermoplastic composites (LCFRT), a method for producing the same and an application thereof. The present disclosure relates to long carbon fiber thermoplastic composites with high-performance, light-weight, environmental protection, and recyclability.

### BACKGROUND

The mechanical properties of composite material and metal material are significantly different mainly in the following two aspects. 1) The mechanical properties of composite materials exhibit obvious anisotropy, and have a strong designability; while metal materials are isotropic, and have unchanged performance when the composition of the components is determined. 2) The impact failure modes of composite materials and metal materials are different; the impact failure mode of composite materials is featured complex diversity, which is a multi-scale progressive rigid gradual failure, while the impact failure mode of metal materials is yield fracture failure dominated by plastic deformation. By far, fiber composites have become the most important, most numerous, and most widely-used light-weight, high-strength composites, and are mainly divided into thermosetting composites and thermoplastic composites. Thermosetting composites are featured by high rigidity, good anti-fatigue performance, integral formation and light weight. Yet the thermosetting composites have high manufacturing costs and complex process control, which makes mass and standard industrial production difficult. Thermoplastic composites are featured by light weight, high rigidity, good low-temperature impact toughness, simple processing and forming process, integral and modularized formation, short production cycle, and low cost, which enables standardized mass production. At the same time, thermoplastic composites have the remarkable features of ecological and environmentally friendly processing and recyclability, which is in line with the advanced technological trends of new composite materials with high performance, light weight, and low processing cost and is in line with industrial and regulatory requirements of the government.

According to the retained length dimension of carbon fiber (CF) in the resin base (thermosetting resin base and thermoplastic resin base), there are three morphological structures of carbon fiber (CF): short-cut carbon fiber (SCF), long carbon fiber (LCF), continuous carbon fiber (CCF, including two-dimensional woven fabrics and three-dimensional fabrics). Short-cut carbon fiber (SCF) reinforced thermoplastic composites (pellet, SCFRT) contain short-cut carbon fiber (SCF) with a length dimension of 3-5 mm, wherein the retained length dimension of carbon fiber (SCF) in a product is 0.1-0.3 mm, which results in a small fiber length-to-diameter ratio and limited reinforcing effect, and the weight content of carbon fiber (SCF) is 10-35wt%. Long carbon fiber reinforced thermoplastic composites (pellet, LCFRT) contains carbon fiber (LCF) having a length dimension of 5-25mm, wherein a retained length dimension of carbon fiber (LCF) in the product is 5-8mm, which results in a great fiber length-to-diameter ratio and significantly improved reinforcing effect, and the weight content of carbon fiber (LCF) is 40-70wt%.

The conventional composite vehicle hubs made of carbon fiber reinforced thermosetting epoxy resin base composites (CFRP) currently have the following disadvantages or deficiencies: large specific gravity, easy moisture absorption and deformation, poor low temperature impact resistance, high manufacturing and processing costs and low product qualification rate, which does meet the requirements of batch and low-cost application for special applications.

### SUMMARY

### Technical problem

The technical problem to be solved by the present invention is to provide ecological and environmental friendly long carbon fiber reinforced thermoplastic composites (LCFRT) with a light weight, high strength, good impact toughness, good heat dissipation, wear resistance, corrosion resistance, fatigue resistance, excellent forming and processing performance, simple manufacturing process, low manufacturing cost, designability and recyclability, a method for producing the same and an application thereof.

### Solution

Provided in the present disclosure is long carbon fiber reinforced thermoplastic composites comprising: long carbon fiber, thermoplastic resin base, a filler and an auxiliary,
wherein a weight content of the long carbon fiber (LCF) is 40-70 wt%; a content of the thermoplastic resin base is 25-40 wt%; a weight content of the filler is 3-15 wt% by weight; and a content of the auxiliary is 2-5 wt%.

There is provided the long carbon fiber reinforced thermoplastic composites according the present disclosure, wherein a pellet of the composites has a length dimension of 5 to 25 mm, a preferably length dimension of the pellet being 10 to 15 mm, and the pellet has a diameter dimension of 4 to 7 mm.

There is provided the long carbon fiber reinforced thermoplastic composites according to the present disclosure, wherein a retained length dimension of the long carbon fiber (LCF) in a fabricated shaped part article is 0.5-15 mm, a preferable retained length dimension of the long carbon fiber (LCF) being 5 to 8 mm, and meets with a normal distribution requirement of ≥80%.

There is provided the long carbon fiber reinforced thermoplastic composites according to the present disclosure, wherein the thermoplastic resin base is one selected from a group consisting of polyamide (PA), polycarbonate (PC), polybutylene terephthalate (PBT), polyethylene terephthalate (PET), polyoxymethylene (POM), polyketone (POK), polyetherketone (PEK), polyetheretherketone (PEEK), polyphenylene sulfide (PPS), polysulfone (PSU), polyethersulfone (PES), polyphenylene sulfone (PPSF), polythioether sulfone (PTES), polyarylene sulfide (PAS), polyimide (PI), polyamideimide (PAI), polyetherimide (PEI), thermoplastic polyester (TPEE), and thermoplastic polyurethane (TPU), or is a polyphasic multicomponent polymer blend that is formed further physically or mechanically blending or chemically modifying two or more of the above.

There is provided the long carbon fiber reinforced thermoplastic composites according to the present disclosure, the filler contains 5-35 wt% conductive filler, 10-55 wt% wear-resistant filler, and 35-70 wt% thermal conductive filler, wherein, the conductive filler is one selected from a group consisting of conductive carbon black, conductive graphite, and carbon nanotube, or is blend composites formed by two or more of the above; the wear-resistant filler is polytetrafluoroethylene or molybdenum disulfide, or is blend composites formed by two or more of the above; the thermal conductive filler is one selected from a group consisting of micro-aluminum fiber, nano-silicon carbide fiber, nano-graphene, nano-aluminum nitride, nano-molybdenum nitride, nano-alumina, and nano-magnesia, or is blend composites formed by two or more of the above.

There is provided the long carbon fiber reinforced thermoplastic composites according to the present disclosure, the auxiliary contains one of an toughener, a flame retardant, an antioxidant, an anti-ultraviolet agent, a lubricant, a nucleating agent, a coupling agent, and an impact modifier, or is blend composites formed by two or more of the above.

There is provided the long carbon fiber reinforced thermoplastic composites according to the present disclosure, wherein a flat plate formed of the composite by injection molding has a surface resistance of 10-10000/Ω•cm, a thermal conductivity of 2-100W/m•K, and a static friction coefficient is 0.09-0.18/µs.

There is further provided in the present disclosure a method for preparing long carbon fiber reinforced thermoplastic composites, wherein, the method uses an isostatic pressing molten resin base impregnation composite process to prepare multi-component blend composites with multi-phase structural characteristics, i.e., a continuous carbon fiber long-filament yarn (CCF) is first subjected to a pre-heating device, then subjected to a yarn (bundle) airflow dynamic dispersion device by controlling a yarn feeding tensioner to form a parallel monodisperse arrangement; then which is melt-blended and composited together with thermoplastic resin base, a filler and an auxiliary conveyed by a guide roll shaft and extruded by a twin screw extruder, to form multi-component blend composites with multi-phase structural characteristics; a molten resin base impregnation and composite molding process is performed by heating and pressurizing in a impregnation slot die and, under the condition of constant isostatic pressure and controlled yarn feeding tension, rapidly pulling 11 to 15 variable-diameter roll shafts arranged at different spacing inside the impregnation die, so as to form a molten multi-phase multi-component blending polymer composite viscous flow system; then go through stretching, cooling, compaction and shaping, blow drying, and cutting, to finally obtain composite pellets (LCFRT).

There is further provided in the present disclosure an application of long carbon fiber reinforced thermoplastic composites in a wheel hub, wherein a composite wheel hub for a low-load pure electric vehicle has a dynamic bending fatigue performance of ≥350Kg, with a loading shift of ≤4%, and a dynamic radial fatigue performance of≥450Kg, with a loading shift of≤2%.

### Advantageous effect

A retained length dimension of carbon fiber (LCF) is 0.5-15 mm in a part product processed and formed with the long carbon fiber reinforced thermoplastic composites (LCFRT) of the present disclosure, preferably 5-8 mm, which meets with the normal distribution requirement of ≥80%, and has the features of small specific gravity, high strength, good low temperature impact performance, small warping deformation, stable size, low moisture absorption, good electrical conductivity and heat dissipation, scratch resistance, ultraviolet ray aging resistance, good chemical solvent corrosion resistant performance, long life span and recyclability. The long carbon fiber reinforced thermoplastic composites (LCFRT) of the present disclosure is an alternative for aluminum alloy in the field of vehicle part manufacture and meets with national regulations of low carbon economy and the environmental protective requirements for energy saving and emission reduction, which has promising future applications.

### BRIEF DESCRIPTION OF THE DRAWINGS

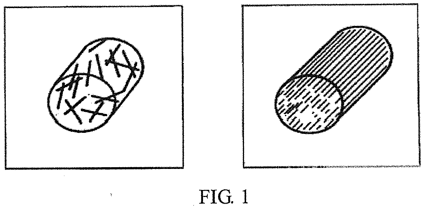

FIG. 1 is a schematic diagram of the structures of SCFRT-G composite pellets and LCFRT-G composite pellets.

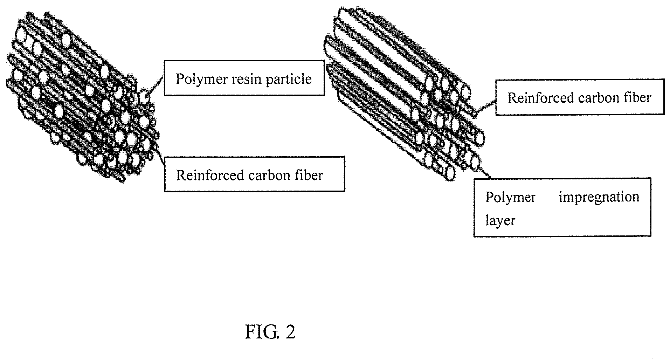

FIG. 2 is a schematic diagram of the structure of long carbon fiber reinforced thermoplastic composites (LCFRT).
FIG. 3 illustrates a hub made of long carbon fiber reinforced thermoplastic composites (LCFRT).

### DETAILED DESCRIPTION

Various exemplary embodiments, features and aspects of the present disclosure are described in detail with reference to the attached drawings. The same reference sign in the drawings indicates elements with the same or similar function. Although the drawings illustrate various aspects of the embodiments, unless otherwise specified, the drawings are not necessarily drawn to scale.

In addition, in order to better describe the present disclosure, numerous details are provided in the following embodiments. One skilled in the art should understand that the present disclosure can be implemented without some of the details.

Provided in the present disclosure is a method for preparing long carbon fiber reinforced thermoplastic composites, comprising the following steps: using a precision sensor (viscosity, temperature, and pressure) to control a heating temperature, a pressure, and a pulling tension for a blend of a continuous carbon fiber bundle (CCF) and a low viscosity molten thermoplastic resin base, arranging 11-15 rolling roll shafts with different chamfers inside an extrusion impregnation and mixing slot die so as to sorting dispersive distributed carbon fibers (bundle) to form continuous monofilament carbon fiber (CCF), and, under the conditions of keeping a melting temperature and a low viscous fluid controlling an effective isostatic pressure inside the impregnation slot die at 85-250 MPa so that the continuous monofilament carbon fiber (CCF) is subject to full melt impregnation, wetting, and pressure compacting forming composition (process), with interface strength between two phases significantly improved, completing the melting impregnation and mixing and forming composition (process) by a one-step method, co-extruding a composite strip to be pressurized under a pressure of 50-180MPa for 1-3 min for compacting pressurization and cold consolidation, obtaining a high-performance long carbon fiber reinforced thermoplastic composites (LCFRT), and finally cutting to obtain composites (pellets) having different length dimensions according to the performance requirements.

Using the above method, a one-step method is adopted to complete the forming composite process for a continuous monofilament carbon fiber (CCF) from being monodispersed to being impregnated in molten thermoplastic resin (base), wetted, and compacted, which significantly improves the impregnation efficiency and forms a good interface (phase) microstructure with more uniformed carbon fiber (CCF) distribution, significantly increased retained length dimension of carbon fiber (LCF), enhanced toughening function (effect), improved processing rheological properties, and significantly improved mechanical properties, dimensional stability, fatigue resistance, impact resistance at high and low temperatures, etc. of parts.

A flat plate formed of the long carbon fiber reinforced thermoplastic composites of the present disclosure by injection molding has a surface resistance of 10-10000/Ω•cm, a thermal conductivity of 2-100W/m•K, and a static friction coefficient is 0.09-0.18/µs.

A retained length dimension of carbon fiber (LCF) in a composite wheel hub for a low-load pure electric vehicle formed of the long carbon fiber reinforced thermoplastic composites (LCFRT) of the present disclosure by precision injection molding is 5-8 mm, which meets with the normal distribution requirement of ≥80%. The composite wheel hub has a dynamic bending fatigue performance of ≥350Kg, with a loading shift of ≤4%, and a dynamic radial fatigue performance of≥450Kg, with a loading shift of≤2%.

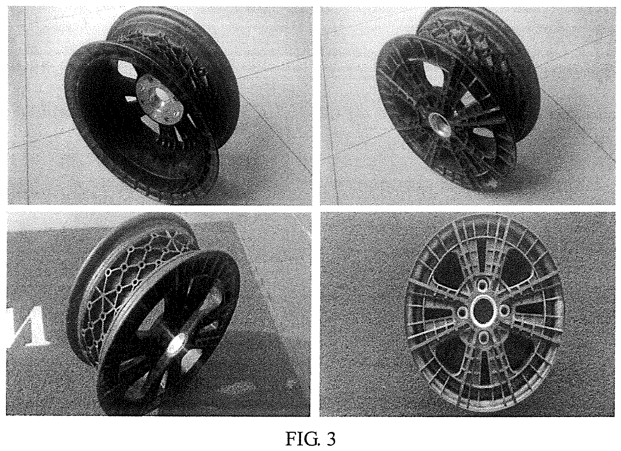

Pure electric vehicle composite wheel hubs are manufactured using precision injection molding technology and are featured by the advantageous properties of simple processing method, low production costs, long life span, light weight, small wing distortion, dimensional stability, low moisture absorption, high strength, good heat dissipation performance, high impact resistance at high and low temperatures, scratch resistance, ultraviolet ray aging resistance, chemical solvent corrosion resistance, safety and reliability, ecological and environmental protection, and recyclability. However, in actual use, due to the limited loading capacity of the composite wheel hubs, the fatigue strength and service life are limited to a ceiling value. Therefore, this product is currently suitable for use in low-speed, light-load miniature vehicles, pure electric vehicles or electric bicycles, as shown in Fig. 3.

### Example

### Example 1

Preparing long carbon fiber reinforced PA66 composites (pellets, LFT-PA66-LCF40), wherein the proportion of each component in the total weight is: 40 wt% PA66, 3 wt% maleic anhydride grafted POE (compatibilizer), 2 wt% conductive carbon black, 2 wt% conductive graphite, 0.3 wt% carbon nanotubes, 0.2 wt% polytetrafluoroethylene, 1.5 wt% molybdenum disulfide , 1 wt% micron aluminum fiber, 0.5 wt% nano-silicon carbide fiber, 0.5 wt% nano-graphene, 3 wt% nano-aluminum nitride, 2 wt% nano-molybdenum nitride, 1 wt% nano-alumina, 0.5 wt% nano-magnesia, 0.5 wt% alkyl bis-amides of fatty acids, 1 wt% anti-ultraviolet agent 745, 1 wt% blend of antioxidant (0.5 wt% 1010 and 0.5 wt% 164), and uniformly mixing and stirring in a high-speed mixer first at a low speed (35 rev/min) and then at a high speed (85 rev/min), multi-phase multi-component blend composites are given.

Precisely controlled continuous carbon fiber filament yarn (CF, T700 of Toray Corporation, 12K) and the multi-component blend composites, at a pulling speed of 25m/s, are heated and pressurized in a special impregnation slot die on a 45 twin-screw extruder; meanwhile the composite (pellet) strips are produced by melting, impregnation and mixing co-extrusion, wherein, calculating based on a total weight of long carbon fiber reinforced PA66 composites (LCFRT), a weight content of carbon fiber (LCF) is 40 wt%, and a weight content of the multi-component blend composite formed with a multi-phase (nano-micron) structural feature is 60 wt%.

The head of the 45 twin-screw extruder is equipped with a specially designed carbon fiber (LCF) melting impregnation and mixing slot having a sensor (viscosity, temperature, and pressure) for automatic control. At the same time, the melting temperature in the extruder barrel is set at: 235°C (Section One), 245°C (Section Two), 250°C (Section Three), and 267°C (Section Four), respectively. The static pressure in the interior of the impregnation slot die is controlled at 165 MPa. Thus prepared is long carbon fiber reinforced PA66 composites (pellets, LFT-PA66-LCF40), which is cooled and then applied a constant pressure of 125 MPa for 2 min for compacting pressurization and cold consolidation. The composite (pre-impregnation pellets) strip is cut to pellets (particles) having a speciifc dimension length. The pellets have a length dimension of 10.83 mm, a diameter dimension of 5.71 mm. The physical and mechanical performance parameter test for the pellets is shown in Table 1

The physical and mechanical performance test for the composite wheel hub for pure electric vehicles formed of the long carbon fiber reinforced PA66 composites (pellets, LFT-PA66-LCF40) by injection molding is shown in Table 2.

**Table 1. Physical and mechanical performance test of long carbon fiber reinforced PA66 composites (PA66-LCF40)**

| Number | Tested item | measurement | result | Grounds for test |
|---|---|---|---|---|
| 1 | Density | g/cm³ | 1.312 | ISO1183-1: 2004 |
| 2 | Stretching strength | MPa | 323 | ISO527-1: 1993 |
| 3 | Bending modulus | MPa | 32800 | ISO178: 2010(E) |
| 4 | Cantilever beam impact toughness (+25 °C) | KJ/m² | 25 | ISO180-2000/A |
| 5 | Cantilever beam impact toughness (-60°C) | KJ/m² | 24 | ISO180-2000/A |

**Table 2. Physical and mechanical performance test of vehicle wheel hub formed of long carbon fiber reinforced PA66 composites (PA66-LCF40) (hub diameter of 15 inches)**

| Number | Tested item | measurement | result | Grounds for test |
|---|---|---|---|---|
| 1 | Retained dimension of carbon fiber (LCF) | Mm | 5.79-8.43 | Observation of burning in a vacuum box |
| 2 | Normal distribution of retained dimension of carbon fiber (LCF) | % | 81 | observation of test in distilled water beaker |
| 3 | Dynamic bending fatigue performance | Kg | 355 | GB/T 5334-1995 Performance requirements and test methods of passenger car wheels |
| | Dynamic bending loading shift | % | 2.82 | |
| 4 | Dynamic radial fatigue performance | Kg | 461 | GB/T 5334-1995 Performance requirements and test methods of passenger car wheels |
| | Dynamic radial loading shift | % | 1.17 | |
| 5 | Surface electrical resistance | /Ω·cm | 450 | IEC60093 |
| | Thermal conductivity | W/m·K | 16.27 | IEC60243-1 |
| | Static friction coefficient | /µ | 0.018 | ISO657 -8 |

### Example 2

Preparing long carbon fiber reinforced PA66 composites (pellet, LFT-PA66-LCF50), wherein the proportion of each component in the total weight is: 28.5 wt% PA66, 3 wt% maleic anhydride grafted POE (compatibilizer), 2 wt% conductive carbon black, 3 wt% conductive graphite, 0.3 wt% carbon nanotubes, 0.3 wt% polytetrafluoroethylene, 2 wt% molybdenum disulfide, 1 wt% micron aluminum fiber, 0.2 wt% nano-silicon carbide fiber, 0.5 wt% nano-graphene, 3 wt% nano-aluminum nitride, 2 wt% nano-molybdenum nitride, 1 wt% nano-alumina, 0.2 wt% nano-magnesia, 1 wt% alkyl bis-amides of fatty acids, 1 wt% anti-ultraviolet agent 745, 1 wt% blend of antioxidant (0.5 wt% 1010 and 0.5 wt% 164), and uniformly mixing and stirring in a high-speed mixer first at a low speed (35 rev/min) and then at a high speed (125 rev/min), multi-phase multi-component blend composites are given.

Precisely controlled continuous carbon fiber filament yarn (CF, T700 of Toray Corporation, 12K) and the thermoplastic resin blend, at a pulling speed of 25m/s, are co-extruded to form composites (pellets) strip at a special impregnation slot die capable of heating and pressurizing on a 45 twin-screw extruder, wherein, calculating based on a total weight of long carbon fiber reinforced PA66 composites (LCFRT), a weight content of carbon fiber (LCF) is 50 wt%, and a weight content of the multi-component blend composite formed with a multi-phase (nano-micron) structural feature is 50 wt%.

The head of the 45 twin-screw extruder is equipped with a specially designed melting impregnation and mixing slot having a sensor (viscosity, temperature, and pressure) for automatic control. At the same time, the melting temperature in the extruder barrel is set at: 245°C (Section One), 255°C (Section Two), 275°C (Section Three), and 285°C (Section Four), respectively. The static pressure in the interior of the impregnation slot die is controlled at 125 MPa. Thus prepared is long carbon fiber reinforced PA66 thermoplastic composite pre-impregnation material (pallets, LFT-PA66-LCF40), which is cooled and then applied a constant pressure of 150 MPa for 3 min for compacting pressurization and cold consolidation. The composite pre-impregnation material (pellets) strip is cut to pellets (particles) having a specific dimension length. The pellets have a length dimension of 11.52 mm, a diameter dimension of 4.39 mm. The physical and mechanical performance parameter test for the pellets is shown in Table 3. Table 4 shows the parameter test of pure electric vehicle wheel hub formed by injection molding in terms of physical and mechanical performance, dimension stability, anti-fatigue performance, and impact resistance at high and low temperatures.

**Table 3. Physical and mechanical performance test of long carbon fiber reinforced PA66 composites (PA66-LCF50)**

| Number | Tested item | measurement | result | Grounds for test |
|---|---|---|---|---|
| 1 | Density | g/cm³ | 1.346 | ISO1183-1: 2004 |
| 2 | Stretching strength | MPa | 379 | IS0527-1: 1993 |
| 3 | Bending modulus | MPa | 34500 | ISO178: 2010 (E) |
| 4 | Cantilever beam impact toughness (+25 °C) | KJ/m² | 18 | ISO180-2000/A |
| 5 | Cantilever beam impact toughness (-60 °C) | KJ/m² | 16 | ISO180-2000/A |

**Table 4. Physical performance test of vehicle wheel hub formed of long carbon fiber reinforced pa66 composites (PA66-LCF50) long carbon fiber (hub diameter 15 inches)**

| Number | Tested item | measurement | result | Grounds for test |
|---|---|---|---|---|
| 1 | Retained dimension of carbon fiber (LCF) | Mm | 7.13-8.64 | Observation of burning in a vacuum box |
| 2 | Normal distribution of retained dimension of carbon fiber (LCF) | % | 84 | observation of test in distilled water beaker |
| 3 | Dynamic bending fatigue performance | Kg | 257 | GB/T 5334-1995 Performance requirements and test methods of passenger car wheels |
| | Dynamic bending loading shift | % | 2.14 | |
| 4 | Dynamic radial fatigue performance | Kg | 489 | GB/T 5334-1995 Performance requirements and test methods of passenger car wheels |
| | Dynamic radial loading shift | % | 1.13 | |
| 5 | Surface electrical resistance | /Ω·cm | 324 | IEC60093 |
| | Thermal conductivity | W/m·K | 75.62 | IEC60243-1 |
| | Static friction coefficient | /µ | 0.012 | ISO657 -8 |

Aforedescribed are merely preferable embodiments of the present disclosure and do not limit the present disclosure. The present disclosure can be described with other specific embodiments that do not depart from the spirit or main features and the principles of the present disclosure. Therefore, it would be appreciated that various modifications, alternatives and improvements made to have a scope, concept and technical means corresponding to the claims of the present disclosure are included in the protection scope of the present disclosure.

## Claims

1. Long carbon fiber reinforced thermoplastic composites, comprising: a long carbon fiber, a thermoplastic resin base, a filler and an auxiliary,
wherein a weight content of the long carbon fiber is 40-70 wt%; a content of the thermoplastic resin base is 25-40 wt%; a weight content of the filler is 3-15 wt% by weight; and a weight content of the auxiliary is 2-5 wt%.

2. The long carbon fiber reinforced thermoplastic composites according to claim 1, wherein a pellet of the composites has a length dimension of 5 to 25 mm, a preferably length dimension of the pellet being 10 to 15 mm, and the pellet has a diameter dimension of 4 to 7 mm.

3. The long carbon fiber reinforced thermoplastic composites according to claim 1 or 2, wherein a retained length dimension of the long carbon fiber (LCF) in a fabricated shaped part article is 0.5-15 mm, a preferable retained length dimension of the long carbon fiber (LCF) being 5 to 8 mm, and meets with a normal distribution requirement of ≥80%.

4. The long carbon fiber reinforced thermoplastic composites according to any one of claims 1-3, wherein the thermoplastic resin base is one selected from a group consisting of polyamide (PA), polycarbonate (PC), polybutylene terephthalate (PBT), polyethylene terephthalate (PET), polyoxymethylene (POM), polyketone (POK), polyetherketone (PEK), polyetheretherketone (PEEK), polyphenylene sulfide (PPS), polysulfone (PSU), polyethersulfone (PES), polyphenylene sulfone (PPSF), polythioether sulfone (PTES), polyarylene sulfide (PAS), polyimide (PI), polyamideimide (PAI), polyetherimide (PEI), thermoplastic polyester (TPEE), and thermoplastic polyurethane (TPU), or is a polyphasic multicomponent polymer blend that is formed further physically or mechanically blending or chemically modifying two or more of the above.

5. The long carbon fiber reinforced thermoplastic composites according to any one of claims 1-4, wherein the filler contains 5-35 wt% conductive filler, 10-55 wt% wear-resistant filler, and 35-70 wt% thermal conductive filler, wherein, the conductive filler is one selected from a group consisting of conductive carbon black, conductive graphite, and carbon nanotube, or is blend composites formed by two or more of the above; the wear-resistant filler is polytetrafluoroethylene or molybdenum disulfide, or is blend composites formed by two or more of the above; the thermal conductive filler is one selected from a group consisting of micro-aluminum fiber, nano-silicon carbide fiber, nano-graphene, nano-aluminum nitride, nano-molybdenum nitride, nano-alumina, and nano-magnesia, or is blend composites formed by two or more of the above.

6. The long carbon fiber reinforced thermoplastic composites according to any one of claims 1-5, wherein the auxiliary contains one of an toughener, a flame retardant, an antioxidant, an anti-ultraviolet agent, a lubricant, a nucleating agent, a coupling agent, and an impact modifier, or is blend composites formed by two or more of the above.

7. The long carbon fiber reinforced thermoplastic composites according to any one of claims 1-6, wherein a flat plate formed of the composites by injection molding has a surface resistance of 10-10000/Ω•cm, a thermal conductivity of 2-100W/m•K, and a static friction coefficient is 0.09-0.18/µs.

8. A method for preparing the long carbon fiber reinforced thermoplastic composites according to any one of claims 1-7, wherein, the method uses an isostatic pressing molten resin base impregnation composite process to prepare multi-component blend composites with multi-phase structural characteristics, i.e., a continuous carbon fiber long-filament yarn (CCF) is first subjected to a pre-heating device, then subjected to a yarn (bundle) airflow dynamic dispersion device by controlling a yarn feeding tensioner to form a parallel monodisperse arrangement; then which is melt-blended and composited together with thermoplastic resin base, a filler and an auxiliary conveyed by a guide roll shaft and extruded by a twin screw extruder, to form multi-component blend composites with multi-phase structural characteristics; a molten resin base impregnation and composite molding process is performed by heating and pressurizing in a impregnation slot die and, under the condition of constant isostatic pressure and controlled yarn feeding tension, rapidly pulling 11 to 15 variable-diameter roll shafts arranged at different spacing inside the impregnation die, so as to form a molten multi-phase multi-component blending polymer composite viscous flow system; then go through stretching, cooling, compaction and shaping, blow drying, and cutting, to finally obtain composite pellets (LCFRT).

9. An application of the long carbon fiber reinforced thermoplastic composites according to any one of claims 1-7 in a wheel hub, wherein a composite wheel hub for a low-load pure electric vehicle has a dynamic bending fatigue performance of ≥350Kg, with a loading shift of ≤4%, and a dynamic radial fatigue performance of≥450Kg, with a loading shift of≤2%.
